(19) Europäisches Patentamt
European Patent Office
Office européen des brevets

(11) **EP 4 513 674 A1**

(12) **EUROPEAN PATENT APPLICATION**

(43) Date of publication:
**26.02.2025 Bulletin 2025/09**

(21) Application number: **24179777.8**

(22) Date of filing: **04.06.2024**

(51) International Patent Classification (IPC):
*H01Q 1/24* (2006.01)   *H01Q 1/28* (2006.01)
*H01Q 1/32* (2006.01)   *H01Q 1/34* (2006.01)
*H01Q 3/30* (2006.01)   *H01Q 17/00* (2006.01)
*H01Q 3/26* (2006.01)   *H01Q 3/46* (2006.01)
*H01Q 19/12* (2006.01)   *H01Q 19/19* (2006.01)
*H01Q 21/06* (2006.01)

(52) Cooperative Patent Classification (CPC):
**H01Q 1/28; H01Q 1/24; H01Q 1/3208; H01Q 1/34;
H01Q 3/30; H01Q 17/007;** H01Q 3/2658;
H01Q 3/46; H01Q 5/45; H01Q 19/12; H01Q 19/19;
H01Q 21/062

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.08.2023 US 202318236060**

(71) Applicant: **Eagle Technology, LLC
Melbourne, FL 32919 (US)**

(72) Inventors:
• **LUTHER, Justin Jody
Melbourne, 32940 (US)**
• **PARSCHE, Francis E.
Palm Bay, 32905 (US)**
• **HIBNER, Verlin A.
Melbourne Beach, 32951 (US)**
• **JANDZIO, Gregory M.
Melbourne, 32934 (US)**
• **RAMIREZ, Daniel A.
West Melbourne, 32904 (US)**

(74) Representative: **Schmidt, Steffen J.
Wuesthoff & Wuesthoff
Patentanwälte und Rechtsanwalt PartG mbB
Schweigerstrasse 2
81541 München (DE)**

(54) **SYSTEM WITH DUAL-FUNCTION ANTENNA STRUCTURE AND ASSOCIATED METHODS**

(57) A system to be carried by a vehicle may include a dual-function antenna structure that includes a substrate and an array of antenna elements carried thereby. A beam forming network may be coupled to the dual-function antenna structure. A radar detector to be carried by the vehicle may be configured to detect radar signals directed to the vehicle. A controller may be configured to control the dual-function antenna structure to switch between a steerable phased array communication mode and a low radar cross section (RCS) mode responsive to the radar detector.

Processed by Luminess, 75001 PARIS (FR)

## Description

## Technical Field

The present disclosure relates to systems, and, more particularly, to a steerable phased array antenna and associated methods.

## Background

Radar cross-section (RCS) is a measure of how detectable an object is by radar. Certain vehicles, such as aircraft, may be designed to have low detectability. These aircraft may have, for example, a combination of absorbent paint and angled surfaces to reflect a radar signal somewhere other than towards the source.

Aircraft antennas can have many different shapes and sizes. Traditionally, antennas may be formed more for their function, and their shape and placement are usually determined by their directional qualities and the frequencies they use to operate. When an antenna is placed in the nose of an aircraft, for example, radar signals may be undesirably reflected by the antenna back towards the source.

The aircraft antennas may operate as maximum power transfer devices where the source resistance is equal to the load resistance. Some receive antennas may reradiate 50 percent of the incident power and convey 50 percent of incident back into the receiving system less dissipative losses.

## Summary

A system to be carried by a vehicle may comprise a dual-function antenna structure that includes a substrate and an array of antenna elements carried thereby, a beam forming network coupled to the dual-function antenna structure, and a radar detector to be carried by the vehicle and configured to detect radar signals directed to the vehicle. The controller may be configured to control the dual-function antenna structure to switch between a steerable phased array communication mode and a low radar cross section (RCS) mode responsive to the radar detector.

The dual-function antenna structure may comprise a plurality of controllable switches associated with the array of antenna elements and coupled to the controller.

The beam forming network may comprise a plurality of controllable phase shifters coupled to the controller. The controller may be configured to operate the plurality of controllable phase shifters in the steerable phased array communication mode and in the low RCS communication mode.

The system may comprise communication circuitry coupled to the dual-function antenna structure. The array of antenna elements may comprise an array of dipole antenna elements. Each dipole antenna element may comprise a medial feed portion and a pair of legs extending outwardly therefrom, with adjacent legs of adjacent dipole antenna elements including respective spaced apart end portions having shapes and relative positioning to provide capacitive coupling between the adjacent dipole antenna elements.

The dual-function antenna structure may comprise a plurality of controllable switches associated with the array of antenna elements and coupled to the controller. The plurality of controllable switches may comprise a first set of controllable switches configured to couple together the medial feed portions of the dipole antenna elements, and a second set of controllable switches configured to couple together the adjacent end portions of the dipole antenna elements.

Each leg may comprise an elongated body portion and an enlarged width end portions connected thereto. The spaced apart end portions in adjacent legs may comprise interdigitated portions.

The array of antenna elements may comprise a first set of dipole antenna elements to provide singular polarization. In other embodiments, the array of antenna elements may comprise first and second sets of orthogonal antenna elements to provide dual polarization.

Another aspect is directed to a system to be carried by a vehicle and comprising a dual-function antenna structure that includes a substrate and an array of antenna elements carried thereby, and a beam forming network coupled to the dual-function antenna structure. A controller may be configured to control the dual-function antenna structure to switch between a steerable phased array communication mode and a low radar cross section (RCS) mode responsive to a radar detector carried by the vehicle detecting radar signals directed to the vehicle.

A method for operating a system to be carried by a vehicle, with the system comprising a dual-function antenna structure that includes a substrate and an array of antenna elements carried thereby, and a beam forming network coupled to the dual-function antenna structure. The method may comprise controlling the dual-function antenna structure to switch between a steerable phased array communication mode and a low radar cross section (RCS) mode responsive to a radar detector carried by the vehicle detecting radar signals being directed to the vehicle.

## Brief Description of the Drawings

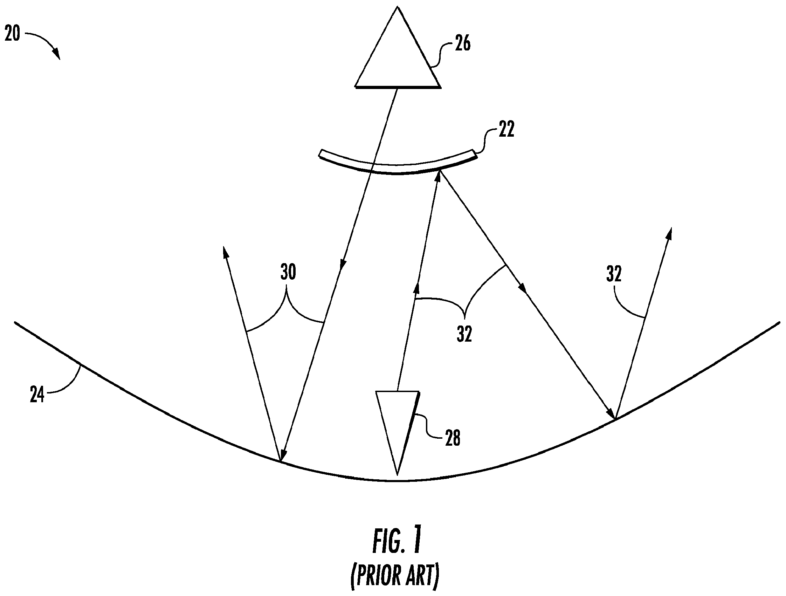

FIG. 1 is a schematic diagram of an antenna with a frequency selective surface (FSS) subreflector as in the prior art.
FIG. 2 is a schematic diagram of an antenna with a dual-function antenna structure of the invention.
FIG. 3 is a plot of reflectivity versus frequency for the dual-function antenna structure as illustrated in FIG. 2.

FIG. 4 is a partial schematic diagram of the array of antenna elements illustrated in FIG. 2 shown as dipole antenna elements and configured to provide singular polarization.

FIG. 5 is a partial schematic diagram of the array of antenna elements illustrated in FIG. 2 shown as dipole antenna elements and configured to provide dual polarization.

FIGS. 6A and 6B are example embodiments of the dipole antenna elements illustrated in FIGS. 4 and 5, respectively.

FIG. 7 is a partial schematic diagram of the dipole antenna elements illustrated in FIG. 5 with controllable switches associated therewith.

FIG. 8 is an exploded schematic view of the dual-function antenna structure illustrated in FIG. 2.

FIG. 9 is an enlarged view of one of the feed organizers illustrated in FIG. 8.

FIG. 10 is an enlarged view of one of the feed organizers illustrated in FIG. 8 with coaxial cables positioned therein.

FIG. 11 is a schematic diagram of a system carried by a vehicle that includes another embodiment of the dual-function antenna structure of the invention.

FIG. 12 is a plot of different radar return antenna patterns for the dual-function antenna structure illustrated in FIG. 11.

FIG. 13 is a detailed schematic diagram of the system illustrated in FIG. 11 for one embodiment of placing the dual-function antenna structure in a low RCS mode.

FIG. 14 is a detailed schematic diagram of the system illustrated in FIG. 11 for another embodiment of placing the dual-function antenna structure in a low RCS mode.

## Detailed Description

The present description is made with reference to the accompanying drawings, in which exemplary embodiments are shown. However, many different embodiments may be used, and thus the description should not be construed as limited to the particular embodiments set forth herein. Rather, these embodiments are provided so that this disclosure will be thorough and complete. Like numbers refer to like elements throughout, and prime notations may be used to indicate similar elements in different embodiments.

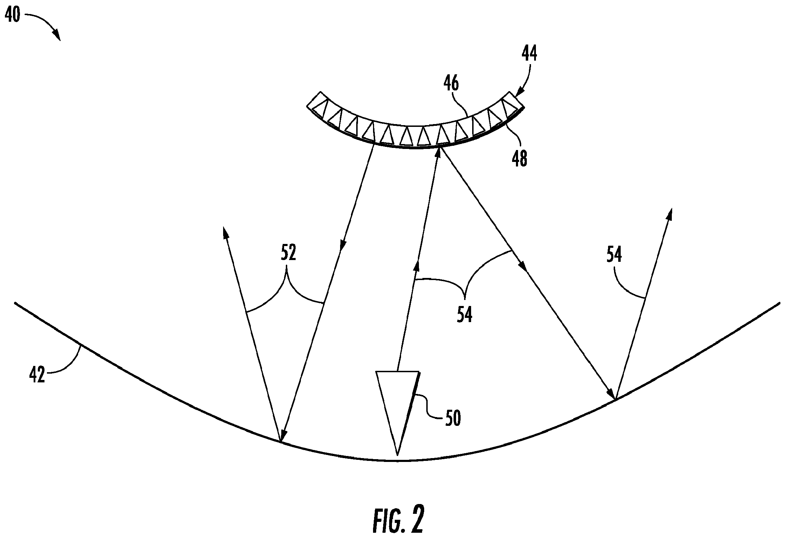

Referring initially to FIG. 2, an antenna **40** includes an antenna main reflector **42** having a shape defining a focal area, and a dual-function antenna structure **44** at the focal area defining a first antenna feed at a first frequency and an antenna subreflector at a second frequency. A second antenna feed **50** is operable at the second frequency and cooperates with the antenna subreflector and the antenna main reflector **42.**

The dual-function antenna structure **44** includes a substrate **46** and an array of antenna elements **48** carried thereby. The array of antenna elements **48** are advantageously configured so that the dual-function antenna structure **44** provides both an antenna feed at the first frequency and an antenna subreflector at the second frequency without requiring a standalone frequency selective surface (FSS) subreflector as discussed in the background.

The antenna **40** may be terrestrial, airborne or space-based (e.g., a satellite). When carried by an aircraft, the antenna **40** may be used in the nose of the aircraft, for example. The antenna main reflector **42** supports a relatively wide bandwidth, such as 0.5 - 50 GHz, for example. However, a single feed cannot typically cover this entire bandwidth. Instead, two or more antenna feeds are typically used. In the example antenna **40,** one antenna feed **50** supports a lower frequency band and the other antenna feed supports a higher frequency band. In other embodiments, an additional antenna feed may be used to support a third frequency band.

The antenna **40** is thus configured as a dual band reflector antenna supporting two different frequency bands. The frequency bands include the low frequency band and the high frequency band. The first antenna feed may be configured to support the high frequency band, and the second antenna feed **50** may be configured to support the low frequency band. For illustration purposes, the high frequency band may cover 5 - 50 GHz, and the low frequency band may cover 0.5 - 5 GHz.

First frequency radio signals **52** generated by the first antenna feed are reflected by the antenna main reflector **42**. Second frequency radio signals **54** generated by the second antenna feed **50** are reflected by the antenna subreflector which are then reflected by the antenna main reflector **42**. The second antenna feed **50** functions as a Cassegrain feed.

The array of antenna elements **48** carried by the substrate **46** operates as a phased array. In some embodiments, the first antenna feed may be scannable with a beam-forming network coupled to the array of antenna elements **48**.

The antenna elements **48** may be loop antennas, horn antennas, patch antennas, helical antennas, or dipole antennas, for example. The second antenna feed **50** may be configured as an array of antenna elements (i.e., a phased array) or as a single antenna element. An array element(s) for the second antenna feed 50 may also be a loop antenna, a horn antenna, a patch antenna, a helical antenna or a dipole antenna, for example.

As will be described in greater detail below, the dual-function antenna structure **44** advantageously provides a dual-function based on the planar metallization of the array of antenna elements **48** on the curved substrate **46,** and based on the capacitive coupling between adjacent antenna elements **48**. This allows the array of antenna elements **48** to function as an antenna feed at the first frequency and to function as a subreflector at the second frequency.

In one embodiment, the array of antenna elements **48** may be configured to passively define the antenna subreflector at the second frequency. As noted above, this is inherently based on the planar metallization of the array of antenna elements **48** and the capacitive coupling between adjacent antenna elements **48**. This allows the first antenna feed and the second antenna feed **50** to simultaneously operate.

In another embodiment, the array of antenna elements 48 may be configured to actively define the antenna subreflector at the second frequency. As will be described in greater detail below, this is accomplished using a plurality of controllable switches associated with the array of antenna elements **48**. Controlling the switches to turn on causes a short between antenna feeds of the antenna elements **48** and between adjacent antenna elements. Consequently, the first antenna feed do not operate when the switches are activated.

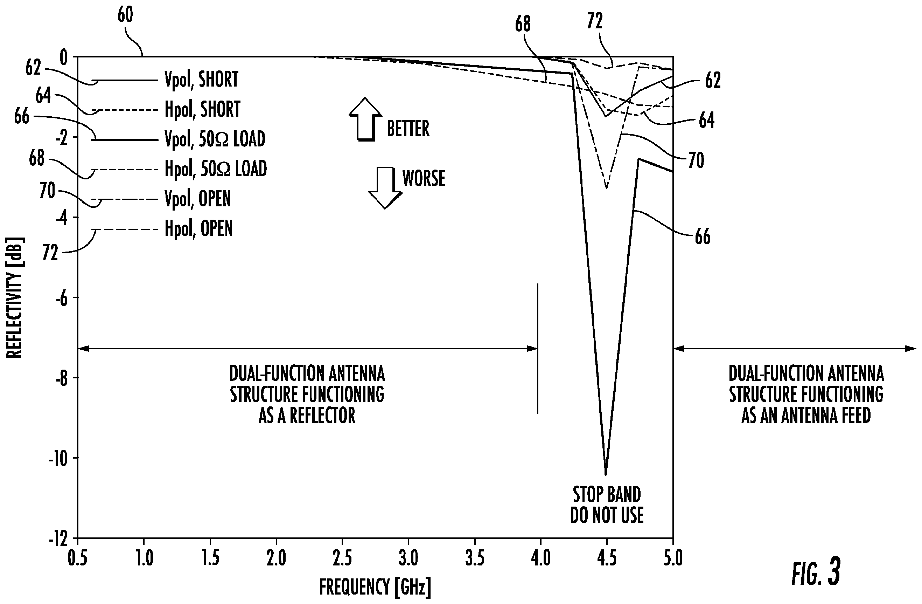

A plot **60** of reflectivity versus frequency for the dual-function antenna structure **44** will be discussed in reference to FIG. 3. The plot **60** corresponds to the array of antenna elements **48** being configured as dipole antenna elements defined in a printed conductive layer. As will be discussed in greater detail below, the dual-function antenna structure **44** may be referred to as a current sheet array where the electric current is confined to a surface rather than being spread through a volume of space.

As noted above, the low frequency band (i.e., first frequency) may cover 0.5 - 5 GHz and the high frequency (i.e., second frequency) band may cover 5 - 50 GHz. The dual-function antenna structure **44** operates as the first antenna feed in the high frequency band and the antenna subreflector in the low frequency band.

The plot **60** of reflectivity versus frequency includes different load conditions of the array of antenna elements **48**. The different load conditions are provided for vertical polarization and for horizontal polarization. The different load conditions include the feeds of the array elements being shorted together, the feeds of the array elements having a normal 50 ohm load, and the feeds of the array elements being open.

Solid line **62** is for the feeds being shorted together for vertical polarization, and dashed line **64** is for the feeds being shorted together for horizontal polarization. Solid line **66** is for the feeds being connected to a 50 ohm load for vertical polarization, and dashed line **68** is for the feeds being connected to a 50 ohm load for horizontal polarization. The 50 ohm load represents normal operation of the dual-function antenna structure **44**. Solid line **70** is for the feeds being open for vertical polarization, and dashed line **72** is for the feeds being open for horizontal polarization.

There is a transition band between 4 - 5 GHz for the dual-function antenna structure **44** operating as the antenna subreflector in the low frequency band and operating as the first antenna feed in the high frequency band. The transition band between 4 - 5 GHz may be referred to as a stop band and is not used by the antenna **40**.

Solid line **66** and dashed line **68** represent normal operation of the dual-function antenna structure **44**. In passive operation, the transition between the antenna subreflector and the first antenna feed is passively achieved. This is based on the planar metallization of the array of antenna elements **48** and the capacitive coupling between adjacent antenna elements **48** on the printed conductive layer. Passive operation of the dual-function antenna structure **44** allows the first antenna feed and the second antenna feed **50** to simultaneously operate.

To minimize or reduce the transition band, controllable switches may be used to short the feeds of the dipole antenna elements and to short the capacitive coupling between adjacent dipole antenna elements. This is a method to actively configure the dual-function antenna structure **44** as the antenna subreflector. The use of switches correspond to solid line **62** and dashed line **64** where the feeds are actively shorted together along with the capacitive coupling between adjacent dipole antenna elements. This means the first antenna feed does not operate when the antenna subreflector is operating based on the switches being closed.

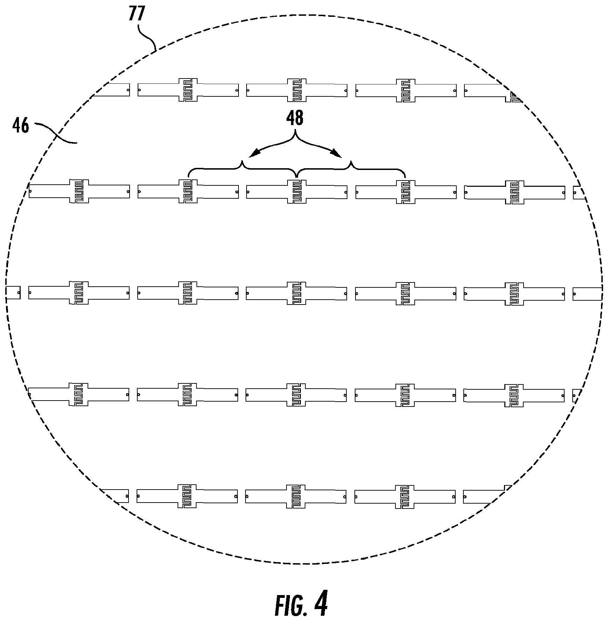

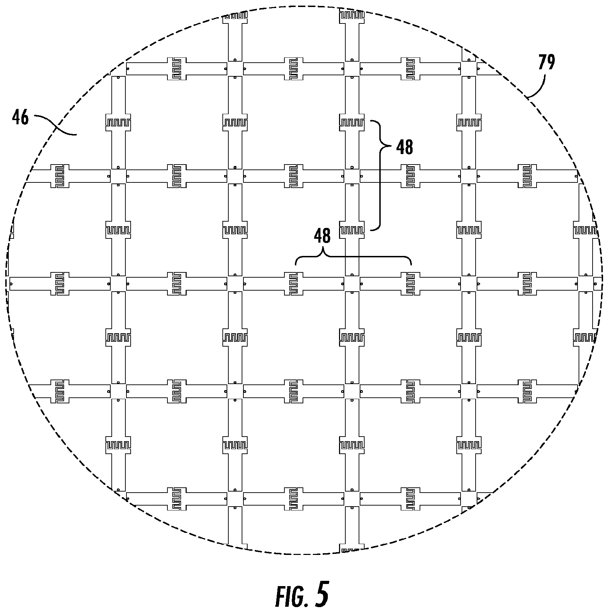

Referring now to FIGS. 4 and 5, partial schematic diagrams **77, 79** of the array of antenna elements **48** will be discussed. The array of antenna elements **48** are shown as dipole antenna elements defined in a printed conductive layer, with the printed conductive layer positioned on a flexible substrate **46**. Partial schematic diagram **77** includes a first set of dipole antenna elements **48** configured to provide singular polarization, whereas partial schematic diagram **79** includes first and second sets of dipole antenna elements **48** configured to provide dual polarization.

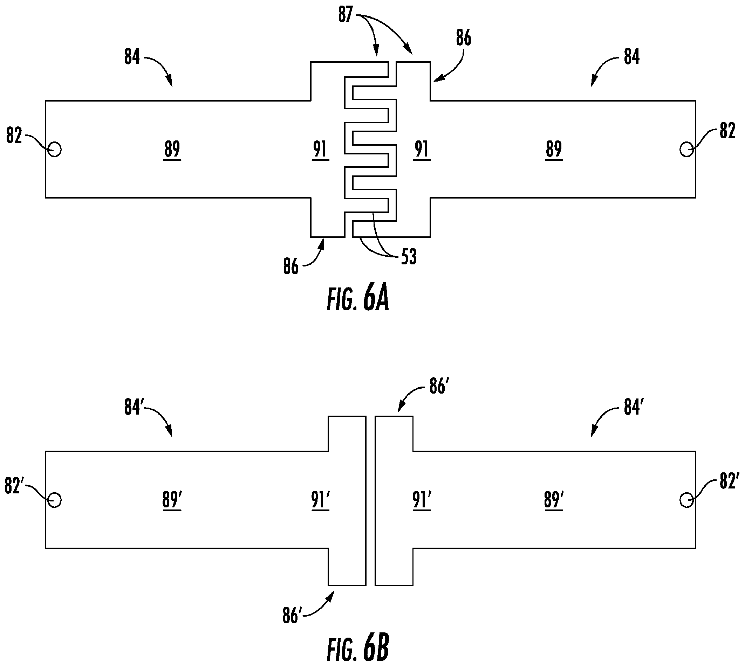

Example embodiments of the dipole antenna elements **48** are shown in FIGS. 6A and 6B. Each dipole antenna element **48** has a medial feed portion **82** and a pair of legs **84** extending outwardly therefrom, with adjacent legs **84** of adjacent dipole antenna elements **48** including respective spaced apart end portions **86** having shapes and relative positioning to provide capacitive coupling between the adjacent dipole antenna elements **48**.

As shown in FIG. 6A, the spaced apart end portions **86** in adjacent legs **84** have overlapping or interdigitated portions **87**. Each leg **84** comprises an elongated body portion **89,** an enlarged width end portion **91** connected to an end of the elongated body portion, and a plurality of fingers **53,** e.g. four, extending outwardly from the enlarged width end portion **91**.

The capacitive coupling provided by interdigitated portions **87** brings broad bandwidth to the antenna by avoiding the resonances associated with individual isolated dipole antennas. Indeed the interdigited portion **87** capacitive coupling causes the array of antenna elements **48** to emulate a continuous sheet of current. Capacitive coupling is measured in ohms of reactance -jx and the required capacitive coupling reactance value in some instances at the lowest frequency of operation may be 100 to 400 ohms in value.

Alternatively, as shown in FIG. 6B, adjacent legs **84'** of adjacent dipole antenna elements may have respective spaced apart end portions **86'** to provide increased capacitive coupling between the adjacent dipole antenna elements. In this embodiment, the spaced apart end portions **86'** in adjacent legs **84'** comprise enlarged width end portions **91'** connected to an end of the elongated body portion **89'** to provide the increased capacitive coupling between the adjacent dipole antenna elements. Of course other arrangements which increase the capacitive coupling between the adjacent dipole antenna elements may also be possible.

The array of dipole antenna elements **48** are sized and relatively positioned so that the first antenna feed may be operable over a frequency range of 5 - 50 GHz. Preferably, a size of each dipole antenna element **48** is less than 1/3 of the wavelength of the highest operating frequency. At the lowest operating frequency the layer **122** may be 2 wavelengths or more in extent.

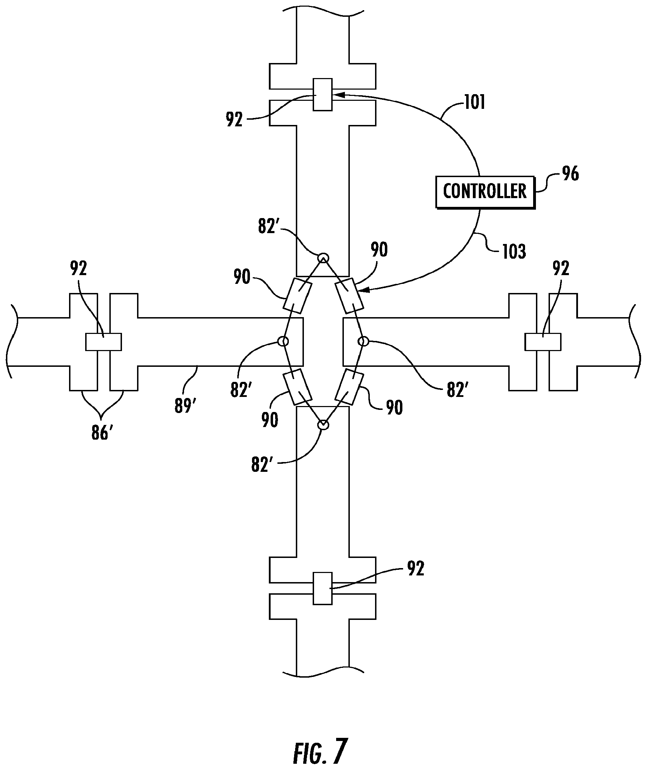

As discussed above, controllable switches **90, 92** as now shown in FIG. 7 may be used to operate the dual-function antenna structure **44** as an antenna subreflector at the second frequency. Switches **90** are connected across the feeds **82'** on adjacent legs **84'** of adjacent dipole antenna elements **48**. Switches **92** are connected across the respective spaced apart end portions **86'** between adjacent dipole antenna elements **48**.

The switches may be micro-electromechanical systems (MEMS), for example. A MEMS device may be an electrostatically actuated, micromachined cantilever beam switching element. When applying a voltage between a fixed electrode and a movable electrode, an electrostatic force is generated and it pulls in the movable electrode (actuator). Unlike conventional relays an electromagnet is not required. When the driving voltage becomes OFF, the electrostatic force will disappear, and then the actuator will go back to the original position because of a self-restoring force. As little electric current flow is required by the MEMS switches they may be controlled by high resistance carbon fiber wiring that does not interact with the antenna or associated radio frequency structures. Other types of switches may be used in addition to MEMS devices.

A controller **96** is configured to operate the switches **90, 92.** In one embodiment, all of the switches **90, 92** may be operated at the same time. In another embodiment, a selected portion of the switches **90, 92** may be operated. Control wire **101** is connected to switches **90,** and control wire **103** is connected to switches **92.** To simplify the drawing, the control wires **101, 103** are only shown being connected to one switch each even though each of the switches **90, 92** would have a connection to one of the respective control wires **101, 103.** The selected portion of switches may be a portion of only switches **90,** or a portion of only switches **92,** or a selected combination portion of both switches **90, 92.**

The control wires **101, 103** may be a resistive carbon wire. A carbon wire may be less susceptible to RF interference. The MEMS devices draw very little electrical current.

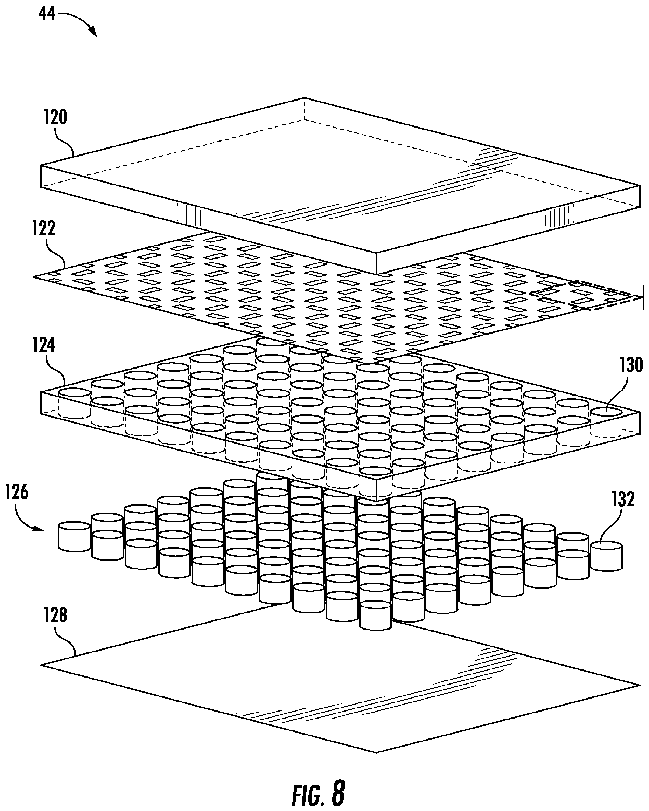

Referring now to FIG. 8, an exploded view of the dual-function antenna structure **44** will be discussed. The dual-function antenna structure **44** is based on a current sheet construction since electric current is confined to a surface rather than being spread through a volume of space.

Upper layer **120** is a dielectric layer used for adjusting impedances between the radio waves and the feeds **82** of the dipole antenna elements **48**. The feeds **82** of the dipole antenna elements **48** may require lower driving resistances of 50 or 188 ohms yet the impedance of the radio waves is normally 377 ohms. Closely coupled dipole arrays without ground plane reflectors may result in feed gap driving resistances of 377 ohms. The upper layer **120** is configured as a sheet of Teflon or light plastic, and may also be referred to as a dielectric matching transformer or a wave matching transformer. Layer **120** is above layer **122** which is the dipole antenna elements **48** carried by the substrate **46**. In some instances artificial dielectrics or metamaterial dielectrics may be used to constitute the upper layer **120,** such artificial dielectrics can constitute metal squares on a printed wiring board (PWB).

Layer **124** is a low dielectric layer with a plurality of openings **130** that are sized to receive the feed organizers **132** shown in layer **126**. The feed organizers **132** provide signals to and receive signals from the feeds **82** of the dipole antenna elements **48**. For dual polarization, a feed organizer **132** carries four coaxial cables since a pair of dipole antenna elements **48** are orthogonally positioned with respect to one another. The dashed corner area corresponds to positioning of one of the feed organizers **132.**

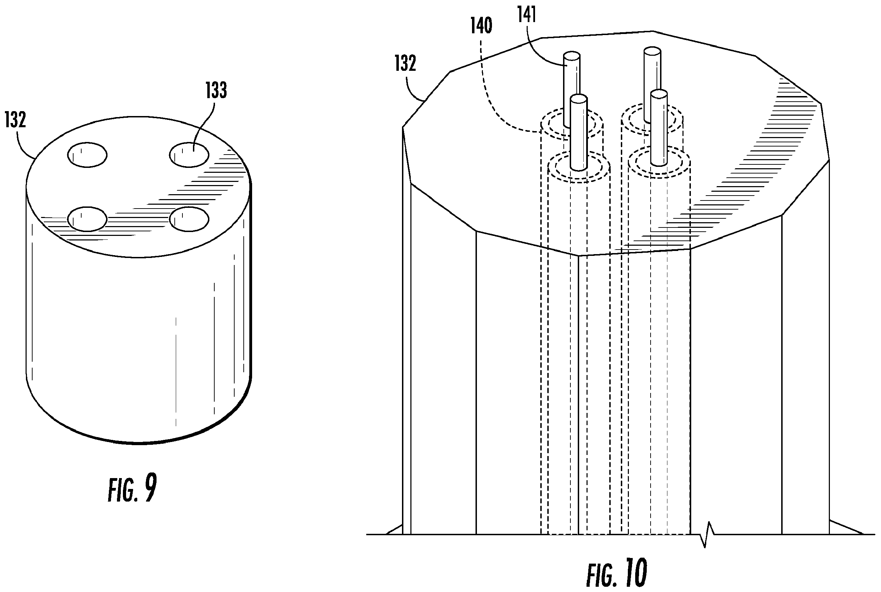

An enlarged view of a feed organizer **132** without the coaxial cables is provided in FIG. 9, and an enlarged view of the feed organizer **132** with the coaxial cables **140** is provided in FIG. 10. The feed organizers **132** are positioned between layer **128,** which is a ground plane, and layer **122** having the dipole antenna elements **48.**

The feed organizers **132** also help keep unwanted electrical currents such as common mode currents from flowing back down over the outside of the coaxial cables **140.** Coaxial cables **140** may exhibit the behavior where current can flow back down over the outside of the shield of a coaxial cable **140.** By running the coaxial cables **140** through feed organizers **132,** this may keep the coaxial cables **140** from having unwanted radiating properties. The coaxial cables **140** convey electric currents between the radio frequency electronics and the antenna, but they do not themselves radiate.

The feed organizers **132** also help keep unwanted electrical currents from flowing back down over the outside of the coaxial cables **140**. Coaxial cables **140** may exhibit the behavior where current can flow back down over the outside of the shield of a coaxial cable **140**. By running the coaxial cables **140** through feed organizers **132,** this may keep the coaxial cables **140** from having unwanted radiating properties. The coaxial cables **140** deliver electric control signals, but they do not themselves radiate.

The current sheet arrangement may also be referred to as a differential feed current sheet. Each of the coaxial cables **140** in the feed organizers **132** are successive in phase: 0°, 90°, 180° and 270°. This may also be referred to as phase quadrature. The coaxial cables **140** may all have the same power so they are equal in amplitude. Pairs of the coaxial cables **140** may act as two electrical current sources in series with each other usefully halving the driving resistances of the feeds **132.**

Another aspect is directed to a method for making a dual-function antenna structure **44** to be positioned at a focal area of a main reflector **42**. The main reflector **42** has a second antenna feed **50** associated therewith and is operable at a second frequency. The method includes forming an array of antenna elements **48** on a substrate **46** to define a first antenna feed at a first frequency and an antenna subreflector at the second frequency.

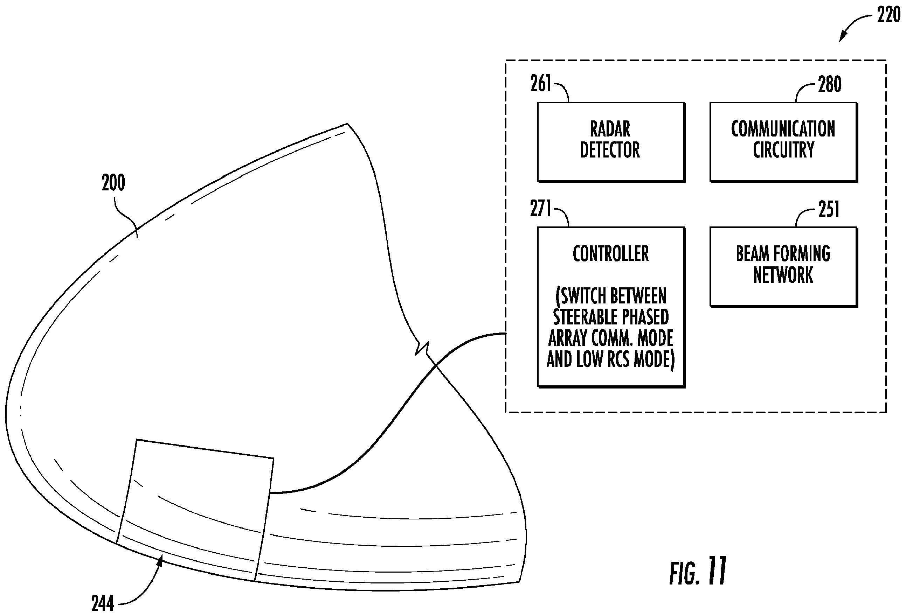

Referring now to FIG. 11, another aspect of the present description is directed to a system **220** to be carried by a vehicle **200,** such as an aircraft. In addition to the vehicle **200** being an airborne vehicle, the vehicle **200** may be land-based, water-based or space-based.

The system **200** includes a dual-function antenna structure **244,** a beam forming network **251,** a radar detector **261,** a controller **271,** and communication circuitry **280.** Certain reference numbers as used above will also be used below but will be preceded by a 2 to refer to like elements.

The dual-function antenna structure **244** is operable between a steerable phased array communication mode and a low radar cross section (RCS) mode. In the steerable phased array communication mode, communication signals may be transmitted and/or received by the dual-function antenna structure **244**. In the low RCS mode, a radar cross section of the dual-function antenna structure **244** is reduced in order to be less detectable by radar. Communication signals are not transmitted or received by the dual-function antenna structure **244** in the low RCS mode.

The beam forming network **251** is coupled to the dual-function antenna structure **244** and to the communication circuitry **280**. The radar detector **261** is configured to detect radar signals being directed to the vehicle **200**. The controller **271** is configured to control the dual-function antenna structure **244** to switch between the steerable phased array communication mode and the low RCS mode responsive to the radar detector **261** detecting radar signals. In other embodiments, the radar detector **261** may be external the vehicle **200** but is in communications with the controller **271**.

The dual-function antenna structure **244** includes a substrate **246** and an array of antenna elements **248** carried thereby. The antenna elements **248** may be dipole antenna elements defined in a printed conductive layer, with the printed conductive layer positioned on a flexible substrate **246**. The antenna elements **48** may be sized to operate within the UHF frequency range (0.3 - 3 GHz), for example. The dipole antenna elements **248** may include a first set of dipole antenna elements configured to provide singular polarization (as shown in FIG. 4), or to include first and second sets of dipole antenna elements configured to provide dual polarization (as shown in FIG. 5).

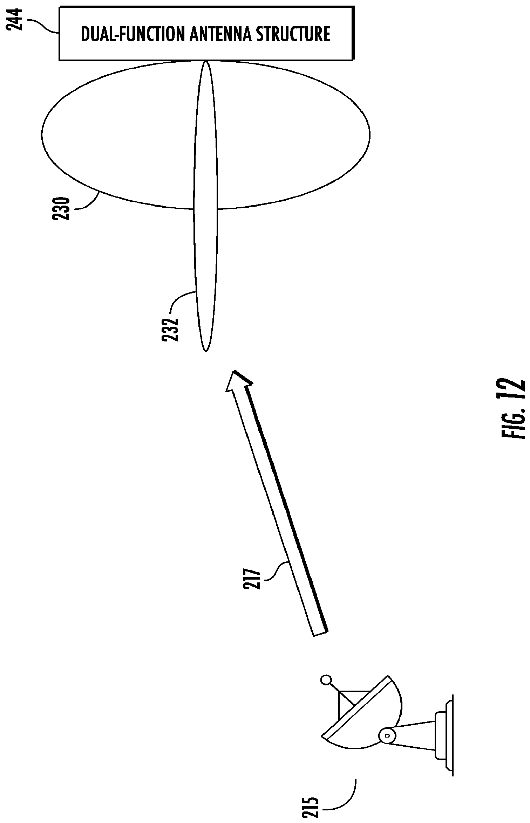

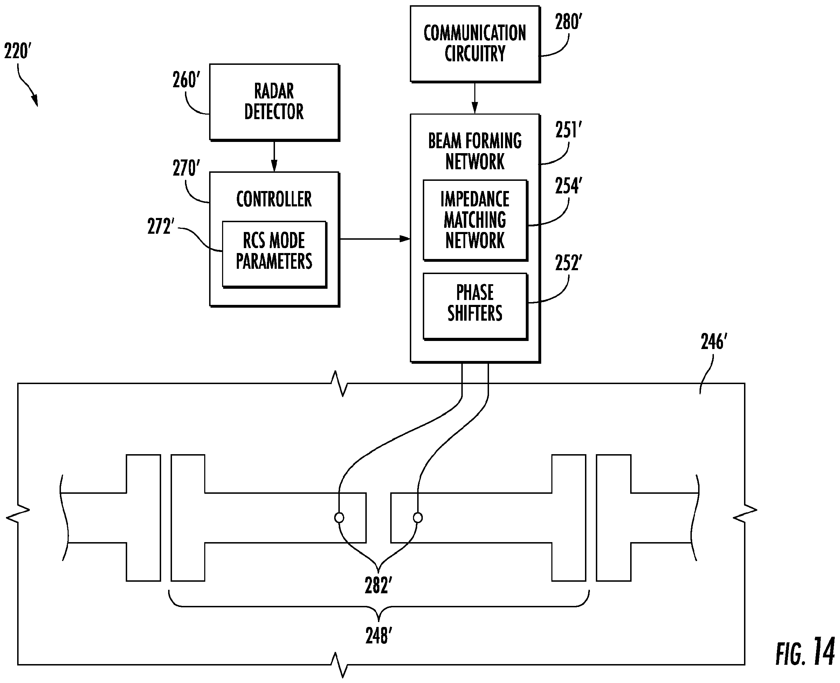

Referring now to FIGS. 12-14, the dual-function antenna structure **244** has different radar cross section (RCS) antenna patterns **230, 232** depending on how the feeds of the dipole antenna elements **248** are being loaded. The beam forming network **251** includes controllable phase shifters **252** for steering an antenna beam by adjusting the phase of the dipole antenna elements **248**. The beam forming network **251** also includes an impedance matching network **254** for matching input impedances of the dipole antenna elements **248** with the output impedances of RF circuitry (e.g., power amplifiers) used to drive the dipole antenna elements **248**.

The RCS antenna patterns **230, 232** are generated in response radar signals **217** being received by the dual-function antenna structure **244** from a radar **215**. Reflection of incident radar signals **217** received by the dual-function antenna structure **244** varies between the different RCS antenna patterns **230, 232**. Antenna pattern **230** will be referred to as an antenna mode RCS scattering pattern, and antenna pattern **232** will be referred to as a structural mode RCS scattering pattern.

The antenna mode RCS scattering pattern **230** corresponds to when the dual-function antenna structure **244** is in the steerable phased array communication mode. In this mode, the feeds of the dipole antenna elements **248** are connected to a 50 ohm load. The antenna mode RCS scattering pattern **230** has a broad pattern, which typically results in a broad glint (i.e., strong response) being displayed on a radar display. This makes it easier for the radar **215** to receive signals reflected by the dual-function antenna structure **244.**

The structural antenna mode RCS pattern **232** corresponds to when the dual-function antenna structure **244** is in the low RCS mode. In the low RCS mode, the feeds of the dipole antenna elements **248** are shorted together. The structural antenna mode RCS pattern **232** has a narrow beam, which typically results in a small blip being displayed on a radar display. This makes it harder for the radar **215** to receive signals reflected by the dual-function antenna structure **244.**

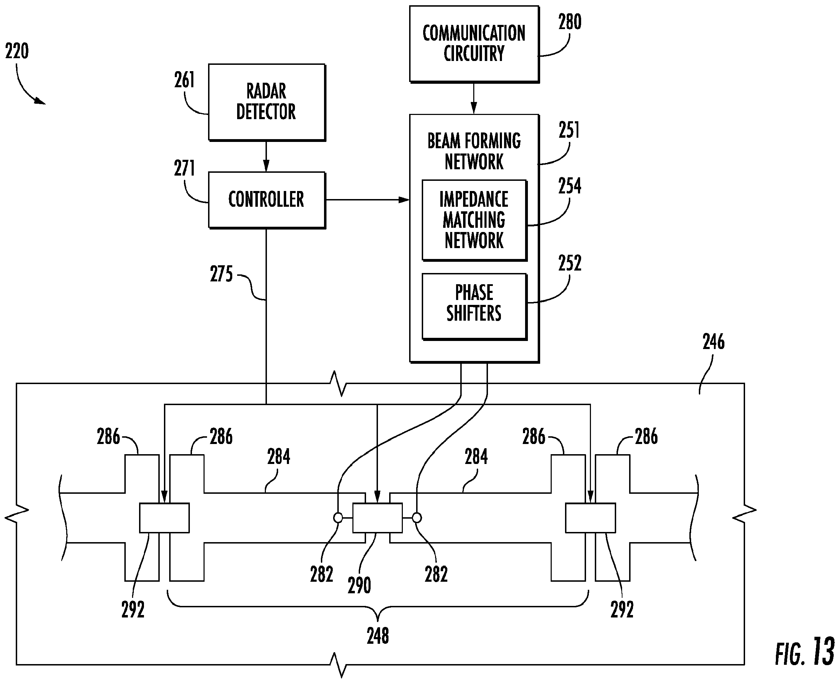

In system **220,** one approach for switching the dual-function antenna structure **244** to the low RCS mode is based on controllable switches **290, 292,** as shown in FIG. 13. Controlling the switches **290, 292** to turn on causes a short between feeds **282** of the antenna elements **248** and between ends of adjacent antenna elements **286**. The dual-function antenna structure **244** functions as a metal plate when the switches **290, 292** are closed. As a result, the narrow structural mode RCS scattering pattern **232** is present instead of the broad antenna mode RCS scattering pattern **230**.

Switches **290** are connected across the feeds **282** on adjacent legs **284** of adjacent dipole antenna elements **248**. Switches **292** are connected across the respective spaced apart end portions **286** between adjacent dipole antenna elements **248**. As noted above, the switches **290, 292** may be micro-electromechanical systems (MEMS) devices, for example.

The controller **271** is configured to operate the switches **290, 292** in response to the radar detector **261** detecting radar signals being directed towards the vehicle **200**. Control wire **275** is used to close the switches **290, 292** at the same time.

In system **220'**, another approach for switching the dual-function antenna structure **244'** to the low RCS mode is based on control of the phase shifters **252'** in the beam forming network **251'**. The impedance matching network **254'** is used to control the phase shifters **252'** so that a phase of the structural mode RCS scattering pattern **232** is 180 degrees out of phase with the antenna mode RCS scattering pattern **230**. RCS mode parameters **272'** of the impedance matching network **254'** are determined ahead of time based on computation analysis. The RCS mode parameters **272'** may be stored in the controller **271'**, as shown, or in the beam forming network **251'**.

The computation analysis includes determining the total radar return $\sigma_{total}$ of the dual-function antenna structure **244'**, which is based on the following equation:

$$\sigma_{total} = \sigma_{SC} + \sigma_{RL}$$

The total reflectivity value $\sigma_{total}$ takes into account all contributing factors in the radar return.

The value of $\sigma_{SC}$ represents the radar cross section of the dual-function antenna structure **244'** when there is a short between feeds **282'** of the antenna elements **248'** and between adjacent antenna elements **286'**. This corresponds to the antenna mode RCS scattering pattern **230**. The amplitude and phase of the scattered return is measured in the frequency domain using a network analyzer. Phase $\beta$ is on the x-axis and amplitude $\alpha$ is on the y-axis.

The value $\sigma_{RL}$ represents the radar cross section of the dual-function antenna structure **244'** when the feeds **282'** of the antenna elements **248'** have a maximum power transfer loading impedance. This corresponds to the structural mode RCS scattering pattern **232**. The amplitude and phase of the scattered return is also measured in the frequency domain using a network analyzer.

The beam forming network **251'** includes an impedance matching network **254',** which may also be referred to as an impedance transformer. The impedance matching network **254'** is used to create a matched impedance between the power amplifiers in the communication circuitry **280'** and the dipole antenna elements **248'**. The impedance matching network **254'** is well suited to operate a large number of regularly spaced dipole antenna elements **248'**.

The maximum power transfer loading impedance is typically 50 ohms by convention. If the system **220'** deviates from convention then the: 1) antenna radiation resistance is equal to the resistive component of the circuit loading impedance, and the 2) reactive component of the antenna impedance is the complex conjugate of the circuit loading impedance (e.g., if the dipole antenna elements **248'** are capacitive then the load impedance needs to be proportionally inductive).

The total radar return $\sigma_{total}$ of the dual-function antenna structure **244** may now be written to include the reflection coefficient gamma $\Gamma$ of the impedance matching network **254'** :

$$\sigma_{total} = \sigma_{SC} + \sigma_{RL}(\Gamma_{mn\ loaded})$$

The impedance matching network **254'** is based on the following equation, where f is a function to be determined by measurement.

$$\Gamma_{mn\ loaded} = f\ (\alpha\ \llcorner\ \beta)$$

The variable $\alpha$ equals an amplitude response of the impedance matching network **254'** associated with a dipole antenna element **248'**. The variable $\beta$ equals a phase response of the impedance matching network **254'** associated with the same dipole antenna element **248'**.

The impedance matching network **254'** may be controlled so that a phase of $\sigma_{SC}$ (structural mode RCS scattering pattern **232**) is out of phase with $\sigma_{RL}$ (antenna mode RCS scattering pattern **230**). RCS mode parameters **272'** of the impedance matching network **254'** needed for the beam forming network **251'** to operate in the low RCS mode may be determined based on the phases of $\sigma_{SC}$ and $\sigma_{RL}$ adding to 0:

$$\sigma_{SC} + \sigma_{RL}(\Gamma_{mn\ loaded}) = 0$$

The above equation may be arranged as follows:

$$\sigma_{SC} = -\sigma_{RL}(\Gamma_{mn\ loaded})$$

The amplitude $\alpha$ and phase $\beta$ of the phase shifters **252'** may now be determined as follows:

$$\Gamma_{mn\ loaded} = f\ (\alpha\ \llcorner\ \beta) = \sigma_{SC}/-\sigma_{RL}$$

The determined amplitude $\alpha$ and phase $\beta$ values define the RCS mode parameters **272'**. Consequently, when the dual-function antenna structure **244'** is switched to the low RCS mode, the computed amplitude $\alpha$ and phase values $\beta$ for the impedance matching network **252'** are used.

Once the impedance matching network **254'** is determined so that the phase of the structural mode RCS scattering pattern **232** is 180 degrees out of phase with the antenna mode RCS scattering pattern **230,** then the radar **215** does may not see a radar return or backscatter from the dual-function antenna structure **244'**.

However, when the phase of the structural mode RCS scattering pattern **232** and the phase of the antenna mode RCS scattering pattern **230** are not completely cancelled, then the radar **215** may see a reduced radar return or backscatter from the dual-function antenna structure **244'**. Also, the reduced radar pattern resulting from the structural and antenna mode cancellation will vary in magnitude as a function of look angle, frequency and polarization.

When the dual-function antenna structure **244'** is in the nose of an aircraft, for example, the dual-function antenna structure **244'** may be curved. A curved surface antenna will have a low structural radar cross section over a large range of look angles while a flat surface antenna will have a high structure radar cross section over a narrow range of look angles.

Another aspect is directed to a method for operating a system **220** to be carried by a vehicle **200,** with the system **220** comprising a dual-function antenna structure **244** that includes a substrate **246** and an array of antenna elements **248** carried thereby, and a beam forming network **251** coupled to the dual-function antenna structure **244**. The method may comprise controlling the dual-function antenna structure **244** to switch between a steerable phased array communication mode and a low radar cross section (RCS) mode responsive to a radar detector **261** detecting radar signals being directed to the vehicle **200**.

Many modifications and other embodiments will come to the mind of one skilled in the art having the benefit of the teachings presented in the foregoing descriptions and the associated drawings. Therefore, it is understood that the foregoing is not to be limited to the example embodiments, and that modifications and other embodiments are intended to be included within the scope of the appended claims.

**Claims**

1. A system to be carried by a vehicle and comprising:

   a dual-function antenna structure to be carried by the vehicle and comprising a substrate and an array of antenna elements carried thereby;
   a beam forming network coupled to the dual-function antenna structure;
   a radar detector to be carried by the vehicle and configured to detect radar signals directed to the vehicle; and
   a controller configured to control the dual-function antenna structure to switch between a steerable phased array communication mode and a low radar cross section (RCS) mode responsive to the radar detector.

2. The system of claim 1 wherein the dual-function antenna structure comprises a plurality of controllable switches associated with the array of antenna elements and coupled to the controller.

3. The system of claim 1 wherein the beam forming network comprises a plurality of controllable phase shifters coupled to the controller.

4. The system of claim 3 wherein the controller is configured to operate the plurality of controllable phase shifters in the steerable phased array communication mode.

5. The system of claim 3 wherein the controller is configured to operate the plurality of controllable phase shifters in the low RCS communication mode.

6. The system of claim 1 comprising communication circuitry coupled to the dual-function antenna structure.

7. The system of claim 1 wherein the array of antenna elements comprises an array of dipole antenna elements.

8. A method for operating a system carried by a vehicle, the system comprising a dual-function antenna structure comprising a substrate and an array of antenna elements carried thereby, and a beam forming network coupled to the dual-function antenna structure, the method comprising:

   operating a controller coupled to the dual-function antenna structure to switch between a steerable phased array communication mode and a low radar cross section (RCS) mode responsive to a radar detector detecting radar signals being directed to the vehicle.

9. The method of claim 8 wherein the dual-function antenna structure comprises a plurality of controllable switches associated with the array of antenna elements and coupled to the controller.

10. The method of claim 8 wherein the beam forming network comprises a plurality of controllable phase shifters coupled to the controller.

FIG. 1
(PRIOR ART)

EP 4 513 674 A1

FIG. 2

FIG. 3

FIG. 4

FIG. 5

FIG. 6A

FIG. 6B

14

FIG. 7

FIG. *8*

FIG. 9

FIG. 10

EP 4 513 674 A1

FIG. 11

DUAL-FUNCTION ANTENNA STRUCTURE

244

230

232

217

215

FIG. 12

FIG. 13

FIG. 14

Europäisches
Patentamt

European
Patent Office

Office européen
des brevets

# EUROPEAN SEARCH REPORT

**Application Number**

EP 24 17 9777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/030244 A1 (DURHAM TIMOTHY E [US] ET AL) 10 February 2005 (2005-02-10)<br>* paragraph [0015] *<br>* paragraph [0037] - paragraph [0048]; figures 1-4 *<br>* paragraph [0071] - paragraph [0076]; figure 9 *<br>- - - - - | 1-10 | INV.<br>H01Q1/24<br>H01Q1/28<br>H01Q1/32<br>H01Q1/34<br>H01Q3/30<br>H01Q17/00 |
| Y | JP 2001 345624 A (MITSUBISHI ELECTRIC CORP) 14 December 2001 (2001-12-14)<br>* paragraph [0020] - paragraph [0021]; figure 3 *<br>* paragraph [0037] - paragraph [0043]; figure 8 *<br>- - - - - | 1-10 | ADD.<br>H01Q3/26<br>H01Q3/46<br>H01Q19/12<br>H01Q19/19<br>H01Q21/06 |

**TECHNICAL FIELDS SEARCHED (IPC)**

H01Q

The present search report has been drawn up for all claims

| Place of search | Date of completion of the search | Examiner |
|---|---|---|
| The Hague | 5 November 2024 | Blech, Marcel |

EPO FORM 1503 03.82 (P04C01)

## ANNEX TO THE EUROPEAN SEARCH REPORT
## ON EUROPEAN PATENT APPLICATION NO.

EP 24 17 9777

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2024

| Patent document cited in search report | Publication date | Patent family member(s) | | Publication date |
|---|---|---|---|---|
| US 2005030244 A1 | 10-02-2005 | CA | 2534732 A1 | 31-03-2005 |
| | | CN | 1856906 A | 01-11-2006 |
| | | EP | 1661201 A2 | 31-05-2006 |
| | | JP | 2007501569 A | 25-01-2007 |
| | | KR | 20060069444 A | 21-06-2006 |
| | | US | 2005030244 A1 | 10-02-2005 |
| | | WO | 2005029636 A2 | 31-03-2005 |
| JP 2001345624 A | 14-12-2001 | JP | 3565140 B2 | 15-09-2004 |
| | | JP | 2001345624 A | 14-12-2001 |

EPO FORM P0459

For more details about this annex : see Official Journal of the European Patent Office, No. 12/82